**Europäisches Patentamt**

(19) **European Patent Office**

**Office européen des brevets**

(11) Veröffentlichungsnummer: **0 028 691**
**B1**

(12) # EUROPÄISCHE PATENTSCHRIFT

(45) Veröffentlichungstag der Patentschrift:
**09.11.83**

(51) Int. Cl.³: **C 01 G 23/00, H 01 M 4/58**

(21) Anmeldenummer: **80105539.3**

(22) Anmeldetag: **16.09.80**

(54) **Verfahren zur Herstellung von Titandisulfid hoher Reinheit und stöchiometrischer Zusammensetzung.**

(30) Priorität: **09.11.79 DE 2945306**

(43) Veröffentlichungstag der Anmeldung:
**20.05.81 Patentblatt 81/20**

(45) Bekanntmachung des Hinweises auf die Patenterteilung:
**09.11.83 Patentblatt 83/45**

(84) Benannte Vertragsstaaten:
**BE CH FR GB LI NL SE**

(56) Entgegenhaltungen:
**AT - B - 275 473**
**DE - A - 2 652 908**
**DE - B - 1 224 288**
**US - A - 4 069 301**
**US - A - 4 137 297**

(73) Patentinhaber: **Degussa Aktiengesellschaft,**
**Weissfrauenstrasse 9, D-6000 Frankfurt am Main 1 (DE)**

(72) Erfinder: **Ruhs, Alexander, Dr., Dipl.-Chem.,**
**Dürerstrasse 41, D-7888 Rheinfelden (DE)**
Erfinder: **Scharz, Rudolf, Dr., Dipl.-Chem.,**
**Taunusstrasse 2, D-8755 Alzenau-Wasserlos (DE)**
Erfinder: **Kleinschmit, Peter, Dr., Dipl.-Chem.,**
**Wildaustrasse 19, D-6450 Hanau 9 (DE)**

Verfahren zur Herstellung von Titandisulfid hoher Reinheit und stöchiometrischer Zusammensetzung

Die Erfindung betrifft ein Verfahren zur Herstellung von Titandisulfid hoher Reinheit und stöchiometrischer Zusammensetzung zur Anwendung als Kathodenmaterial in Sekundärelementen durch Umsetzung von vorerwärmtem Titantetrachlorid mit einem Überschuß an vorerwärmtem Schwefelwasserstoff in einem beheizten Reaktor bei Temperaturen von 400 bis 600°C.

Titandisulfid von möglichst hoher Reinheit und stöchiometrischer Zusammensetzung wird neuerdings als Elektrodenmaterial für bestimmte Batterietypen verwendet. Titandisulfid besitzt viele Eigenschaften, die es als aktives Kathodenmaterial in Sekundärelementen attraktiv machen. Die dazu notwendigen hohen Mobilitäten von Fremdionen und Fremdmolekülen im Titandisulfidgitter sind jedoch in hohem Maße abhängig von seiner kristallinen Perfektion, d. h. von der Abwesenheit von Verunreinigungen und einer Zusammensetzung, die dem theoretischen stöchiometrischen Wert entspricht. Verunreinigungen verschlechtern die Reversibilität des Batteriesystems. Außerdem müssen die $TiS_2$-Teilchen eine große Oberfläche, d. h. eine kleine Teilchengröße besitzen, um ein schnelles Eindringen der Elektrolyten in die Kathode zu gewährleisten. Zusätzlich muß die Teilchengröße auch möglichst einheitlich sein, damit Kathoden mit kontrollierten Porengrößen herstellbar sind. Für die elektrischen Eigenschaften ist es auch wichtig, daß $TiS_2$-Kristallite mit kleinen Längen- oder Seitenverhältnissen entstehen (DE-A-2 652 908).

Bei den bisher bekannten Verfahren zur Herstellung von Titandisulfid (z. B. DE-A-2 652 908, OE-A-275 473 und DE-B-1 224 288) erhält man Produkte, die nicht oder nicht optimal als Elektrodenmaterial für Batterien einsetzbar sind, da sie noch Verunreinigungen und auch die Zusammensetzung nicht genau dem stöchiometrischen Wert entspricht, oder die elektrischen bzw. elektrochemischen Eigenschaften nicht optimal sind.

In der US-A-4 137 297 wird ein Verfahren zur Herstellung von Titandisulfid beschrieben, bei dem ein trockenes, sauerstofffreies Gasgemisch aus Titantetrachlorid und überschüssigem Schwefelwasserstoff bei 460—570°C in einem Reaktionsbehälter umgesetzt wird. Die beiden Reaktionskomponenten werden dabei auf ebenfalls 460—570°C vorerwärmt. Das Gasgemisch durchströmt die Reaktionszone des Reaktors mit einer solchen Geschwindigkeit, daß die gebildeten Titandisulfidpartikeln im Gasstrom mitgeführt und erst außerhalb der Reaktionszone von den Abgasen abgetrennt werden, so daß sich an den Reaktorwänden keine Krusten aus Titandisulfid absetzen können. Zur Vermeidung solcher Titandisulfidablagerungen darf die Temperatur der Reaktorwände außerdem nicht mehr als 100°C, vorzugsweise aber nicht mehr als 50°C höher sein als die Temperatur in der Reaktionszone. Im allgemeinen enthalten $TiS_2$-Pulver, hergestellt aus $TiCl_4$ und $H_2S$ noch wesentliche Mengen Chlor (ca. 2%), das die Reversibilität des Batteriesystems verschlechtert (DE-A-2 652 908).

Das nach diesem Verfahren erhaltene Produkt enthält aber trotz einer thermischen Nachbehandlung bei 130 bis 200°C noch Verunreinigungen und auch die sonstigen Eigenschaften genügen nicht einem optimalen Einsatz als Elektrodenmaterial für Batterien.

Es ist zwar bekannt (OE-A-275 473), $TiS_2$-Pulver zur Verwendung als Trockenschmiermittel durch Umsetzung von $TiCl_4$ mit $H_2S$ und Abscheidung an den Reaktorwänden herzustellen. Dieses Verfahren führt aber zu Krusten, die keine einheitliche Zusammensetzung besitzen. Mit diesem Verfahren sind daher keine für die Verwendung als Elektroden in Sekundärelementen verwendbare $TiS_2$-Pulver zu erwarten.

Es war daher Aufgabe der vorliegenden Erfindung, ein Verfahren zur Herstellung von Titandisulfid hoher Reinheit und stöchiometrischer Zusammensetzung zur Anwendung als Kathodenmaterial in Sekundärelementen zu finden, durch Umsetzung von vorerwärmtem gasförmigen Titantetrachlorid mit einem Überschuß an vorerwärmtem gasförmigen Schwefelwasserstoff in einem beheizten Reaktor bei Temperaturen von 400 bis 600°C, das als Elektrodenmaterial in Batterien optimal verwendbar ist.

Diese Aufgabe wurde erfindungsgemäß dadurch gelöst, daß durch Einstellung der Temperatur an den Reaktorwänden und/oder der Verweilzeit des Gasgemisches im Reaktor eine Ablagerung des gebildeten Titandisulfids auf den Reaktorinnenwänden erzwungen wird, von wo es mechanisch abgestreift und in Gegenrichtung zum Abgasstrom aus dem Reaktor entfernt wird.

Es hat sich überraschenderweise gezeigt, daß durch die erzwungene Ablagerung des gebildeten Titandisulfids auf den Reaktorinnenwänden, die man bisher meist zu verhindern suchte, die mechanische Abstreifung und die Entfernung aus dem Reaktor in Gegenrichtung zum Abgasstrom ein Produkt entsteht, das eine hohe Reinheit, eine stöchiometrische Zusammensetzung, und einen kristallinen Aufbau in einem solchen Maße aufweist, daß es als Material für Elektroden in Batterien optimal einsetzbar ist.

Die Herstellung des Titandisulfids erfolgt durch Einleiten von gasförmigem Titantetrachlorid und gasförmigem Schwefelwasserstoff in einen beheizten Reaktor unter Ausschluß von oxydierenden Gasen und Feuchtigkeit. Als Reaktor dient beispielsweise ein senkrecht stehendes Rohr, dessen Innenfläche mit Hilfe eines mechanischen Abstreifers gereinigt werden kann. Die Reaktionstemperatur im Gasraum beträgt 400 bis 600°C, vorzugsweise 500 bis 550° C, wobei die Temperatur der Reaktorwände vorteilhafterweise um wenigstens 50° C höher liegt als die Temperatur der Reaktionskomponenten. Anstatt durch eine erhöhte Reaktorwandtemperatur kann man die gewünschte und für das erfindungsgemäße Produkt notwendige Ablagerung des sich bildenden Titandisulfids auf den Reaktorinnenwänden auch durch die Einstellung einer verhältnismäßig kleinen Reaktionsgasgeschwindigkeit und damit hohen Verweilzeit des Reaktionsgasgemisches in der Reaktionszone erzwingen. Die hierfür günstigsten Parameter lassen sich bei vorgegebenem Reaktor leicht ermitteln. So läßt sich beispielsweise bei einer Reaktorlänge von 100 cm, einem Reaktordurchmesser von 12 cm, einer Reaktorwandtemperatur von 550° C, einem Einsatzverhältnis $TiCl_4 : H_2S = 1 : 2,3$, einer Temperatur der Reaktionskomponenten von 500° C stündlich eine Menge von 500 g $TiCl_4$ unter nahezu vollständiger Ablagerung des gebildeten Titandisulfids auf den Reaktorinnenwänden umsetzen.

Die Zuführung der zuvor auf Temperaturen von vorzugsweise 350—450° C vorerwärmten Reaktionskomponenten Titantetrachlorid und Schwefelwasserstoff erfolgt durch getrennte Einlaßöffnungen, vorteilhafterweise im unteren Drittel des Reaktors, wobei das molare Einsatzverhältnis von $TiCl_4 : H_2S$ zwischen 1 : 2,1 und 1 : 4 liegt. Die Verwendung von Stickstoff als Trägergas ist zwar nicht zwingend notwendig, in vielen Fällen jedoch von Vorteil, besonders bei sehr geringen Strömungsgeschwindigkeiten der Reaktionskomponenten.

Das gebildete Titandisulfid setzt sich bei den erfindungsgemäßen Reaktionsbedingungen in Form von Agglomeraten an der Reaktorinnenwand ab und wird vorzugsweise durch einen mechanischen Abstreifer periodisch zur Austragsöffnung am unteren Ende des Reaktors befördert. Die Abgase aus Chlorwasserstoff, nichtumgesetztem Titantetrachlorid und Schwefelwasserstoff verlassen das Reaktionsgefäß am oberen Ende, wobei der eventuell mitgerissene $TiS_2$-Feinanteil durch ein Filter zurückgehalten wird.

Die Einlaßöffnung für das Titantetrachlorid in den Reaktor liegt vorteilhafterweise oberhalb der Einlaßöffnung für den Schwefelwasserstoff, wodurch bei der Austragung des Titandisulfids eine Nachbehandlungszone im Reaktor entsteht, die überwiegend aus Schwefelwasserstoff besteht. Dadurch werden eventuell adsorbierte Titantetrachloridspuren sowie auch niedere Titansulfide beseitigt.

Das mechanisch von den Reaktorinnenwänden abgestreifte Produkt gelangt dann in eine Vorlage und wird vorzugsweise im Stickstoffstrom abgekühlt.

Mit dem erfindungsgemäßen Verfahren erhält man ein röntgenographisch reines Titandisulfid von sehr hoher Reinheit, das den hohen Anforderungen für den Einsatz als Elektrodenmaterial in Batterien optimal genügt. Eine gleichmäßigere Kornverteilung und damit noch bessere Eigenschaften als Elektrodenwerkstoff erhält man durch eine mechanische Vermahlung des Titandisulfids, vorzugsweise in einer Stiftmühle.

Die Ausbeuten betragen 90% und höher in bezug auf das eingesetzte Titantetrachlorid.

Folgendes Ausführungsbeispiel soll das erfindungsgemäße Verfahren näher erläutern:

Ein senkrecht stehender Rohrreaktor (Innen-⌀ 12 cm, Höhe 100 cm) wurde von außen auf 550° C erwärmt. Dem Reaktor wurden durch eine seitliche Einströmöffnung in ca. 30 cm Höhe stündlich 820 g $TiCl_4$-Dampf von 400° C zugeführt. Die Einspeisung des ebenfalls auf 400° C erhitzten Schwefelwasserstoffs erfolgte seitlich am unteren Ende des Reaktors. Das molare Einsatzverhältnis $H_2S : TiCl_4$ betrug 2,3 : 1.

Die überwiegend aus Chlorwasserstoff bestehenden Reaktionsabgase verließen das Reaktionsgefäß am oberen Ende, nichtumgesetztes $TiCl_4$ konnte in einem nachgeschalteten Kühler zurückgewonnen werden.

Das gebildete $TiS_2$ wurde durch einen mechanischen Abstreifer periodisch nach unten in eine Vorlage ausgetragen und im Stickstoffstrom abgekühlt. Stündlich fielen 442 g des Produktes in Form von grünglänzenden Blättchen an, entsprechend einer Ausbeute von 91,4% (bezogen auf $TiCl_4$). Der chemischen und röntgenographischen Analyse zufolge handelte es sich um reines $TiS_2$. Die Gehalte an Chlor bzw. freiem Schwefel betrugen weniger als 0,4 bzw. 0,2%.

## Patentansprüche

1. Verfahren zur Herstellung von Titandisulfid hoher Reinheit und stöchiometrischer Zusammensetzung zur Anwendung als Kathodenmaterial in Sekundärelementen durch Umsetzung von vorerwärmtem gasförmigen Titantetrachlorid mit einem Überschuß an vorerwärmtem gasförmigen Schwefelwasserstoff in einem beheizten Reaktor bei Temperaturen von 400 bis 600° C, dadurch gekennzeichnet, daß durch Einstellung der Temperatur an den Reaktorwänden und/ oder der Verweilzeit des Gasgemisches im Reaktor eine Ablagerung des gebildeten Titandisulfids auf den Reaktorinnenwänden erzwungen wird, von wo es mechanisch abgestreift und in Gegenrichtung zum Abgasstrom aus dem Reaktor entfernt wird.

2. Verfahren nach Anspruch 1, dadurch gekennzeichnet, daß die Temperatur der Reaktorwände um wenigstens 50° C höher ist als die Temperatur der Reaktionskomponenten.

3. Verfahren nach den Ansprüchen 1 und 2, dadurch gekennzeichnet, daß die mechanische Abstreifung des gebildeten Titandisulfids von den Reaktorwänden in periodischen Abständen erfolgt.

4. Verfahren nach den Ansprüchen 1 bis 3, dadurch gekennzeichnet, daß das Titantetrachlorid und der Schwefelwasserstoff vor dem Einleiten in den Reaktor auf 350 bis 450° C vorerwärmt werden.

5. Verfahren nach den Ansprüchen 1 bis 4, dadurch gekennzeichnet, daß die Zuleitungen des Titantetrachlorids und des Schwefelwasserstoffs bei senkrecht stehendem rohrförmigen Reaktor im unteren Drittel des Reaktors erfolgen.

6. Verfahren nach den Ansprüchen 1 bis 5, dadurch gekennzeichnet, daß die Einleitung des Titantetrachlorids oberhalb der Einleitung des Schwefelwasserstoffs in den Reaktor erfolgt.

7. Verfahren nach den Ansprüchen 1 bis 6, dadurch gekennzeichnet, daß das Titandisulfid mechanisch vermahlen wird.

## Claims

1. A process for the production of titanium disulphide having a high degree of purity and a stoichiometric composition for use as cathode material in secondary cells by the reaction of pre-heated gaseous titanium tetrachloride with an excess of preheated gaseous hydrogen sulphide in a heated reactor at a temperature of from 400 to 600°C, characterised in that by adjusting the temperature of the reactor walls and/or by adjusting the residence time of the gas mixture in the reactor, a deposit of the resulting titanium disulphide is forced to form on the inside walls of the reactor, from where it is mechanically stripped off and removed from the reactor in the opposite direction to the flow of waste gas.

2. A process according to claim 1, characterised in that the temperature of the reactor walls is at least 50°C higher than the temperature of the reaction components.

3. A process according to claims 1 and 2, characterised in that the titanium disulphide which has formed is mechanically stripped off from the reactor walls in periodic intervals.

4. A process according to claims 1 to 3, characterised in that the titanium tetrachloride and the hydrogen sulphide are pre-heated to from 350 to 450°C before being introduced into the reactor.

5. A process according to claims 1 to 4, characterised in that the titanium tetrachloride and the hydrogen sulphide are supplied in the lower third of the reactor in the case of a vertically upright tubular reactor.

6. A process according to claims 1 to 5, characterised in that the titanium tetrachloride is introduced into the reactor above the introduction of the hydrogen sulphide.

7. A process according to claims 1 to 6, characterised in that the titanium disulphide is ground mechanically.

## Revendications

1. Procédé de préparation de disulfure de titane de grande pureté et de composition stoéchiométrique, pour utilisation comme matériau de cathode dans les piles secondaires, par réaction de tétrachlorure de titane gazeux préchauffé avec un excès d'hydrogène sulfuré gazeux préchauffé, dans un réacteur chauffé à une température de 400 à 600°C, procédé caractérisé en ce que, par réglage de la température des parois du réacteur et/ou de la durée de séjour du mélange gazeux dans le réacteur, on oblige le disulfure de titane formé à se déplacer sur les parois internes du réacteur, d'où le produit est détaché par raclage mécanique et est extrait du réacteur à contre-courant du courant gazeux.

2. Procédé suivant la revendication 1, caractérisé en ce que la température des parois du réacteur est supérieure d'au moins 50°C à la température des composants réactionnels.

3. Procédé selon l'une des revendications 1 et 2, caractérisé en ce que le raclage mécanique du disulfure de titane formé sur les parois du réacteur s'effectue périodiquement.

4. Procédé selon l'une quelconque des revendications 1 à 3, caractérisé en ce que le tétrachlorure de titane et l'hydrogène sulfuré sont préchauffés, avant leur introduction dans le réacteur, à une température de 350 à 450°C.

5. Procédé selon l'une quelconque des revendications 1 à 4, caractérisé en ce que les conduites d'amenée du tétrachlorure de titane et de l'hydrogène sulfuré sont placées, dans le cas d'un réacteur tubulaire vertical, dans le tiers inférieur du réacteur.

6. Procédé selon l'une quelconque des revendications 1 à 5, caractérisé en ce que l'introduction du tétrachlorure de titane s'effectue au-dessus de l'introduction de l'hydrogène sulfuré.

7. Procédé selon l'une quelconque des revendications 1 à 6, caractérisé en ce que le disulfure de titane est broyé mécaniquement.